# FASCICULE DE BREVET EUROPEEN

(11) **EP 2 472 222 B1**
(45) Date de publication et mention de la délivrance du brevet: **05.06.2013**
(21) Numéro de dépôt: 11191239.0
(22) Date de dépôt: 30.11.2011
(51) Int. Cl.: G01C 19/66

(54) **Système de fixation pour bloc optique de gyromètre laser**
Befestigungssystem für Lichtblock eines Laser-Gyrometers
Attachment system for an optical unit of a laser rate gyro

(30) Priorité: 31.12.2010 FR 1005207
(43) Date de publication de la demande: 04.07.2012
(73) Titulaire: Thales, 92200 Neuilly Sur Seine (FR)
(72) Inventeur: Boura, André, 86100 CHATELLERAULT (FR)
(74) Mandataire: Esselin, Sophie

(56) Documents cités:
- EP-A1- 0 857 947
- WO-A2-99/34236
- US-A- 4 890 812

## Description

### DOMAINE TECHNIQUE

La présente invention concerne les gyromètres laser, et plus particulièrement, un système de fixation du bloc optique d'un gyromètre laser.

### ETAT DE L'ART

Un gyromètre laser, ou gyrolaser, est un capteur optique de mouvement, permettant de mesurer la vitesse de rotation du référentiel du capteur par rapport à un référentiel galiléen, suivant un ou plusieurs axes. Les gyromètres laser sont des capteurs utilisés dans des unités de mesures inertielles, ou UMIs. On trouve ces UMIs dans les centrales inertielles ou les blocs-senseurs de systèmes de navigation par inertie mis en oeuvre à bord de certains types de véhicules comme les aéronefs.

Un gyromètre laser comprend principalement un bloc optique, monobloc, à cavité(s) laser(s), une par axe de mesure, chaque cavité optique étant formée par un assemblage polygonal de miroirs sur le bloc optique et un milieu amplificateur, généralement gazeux. Il comprend également une structure mécanique d'activation sur laquelle le bloc optique est fixé, et qui permet d'engendrer un mouvement de rotation alternatif du bloc optique autour d'un axe dit axe d'activation. Suivant l'état de l'art, cette structure mécanique utilise une roue d'activation comprenant une partie extérieure, ou jante, un moyeu de forme cylindrique de révolution, et des lames planes radiales entre la jante et le moyeu, et une pièce monobloc appelée tulipe qui crée une liaison mécanique entre le bloc optique et le moyeu de la roue d'activation.

Cette structure mécanique doit assurer une liaison mécanique aussi rigide que possible vis-à-vis des modes vibratoires de basculement et de translation du bloc optique sur la roue.

Pour satisfaire le besoin de rigidité de la fixation du bloc optique, une solution technique de l'état de l'art est d'utiliser deux roues d'activation, fixées d'un côté et de l'autre du bloc optique, relativement à l'axe d'activation, par une tulipe associée, et plus précisément une roue épaisse dans la direction de l'axe d'activation, qui donne la rigidité en translation dans cette direction, et une roue plus mince dans cette même direction qui empêche le basculement du bloc optique dans une direction perpendiculaire à l'axe d'activation tout en permettant aux dilatations différentielles de s'exercer de façon réversible entre les appuis internes et externes des roues. Cette solution technique est utilisée notamment dans le cas où le bloc optique comporte trois cavités de mesure (bloc gyrométrique triaxial), compte tenu des masses et inerties alors en jeu.

Cette structure mécanique doit aussi interdire les glissements relatifs entre pièces sur la plage de température de stockage et de fonctionnement du gyromètre, qui dans le contexte avionique peut s'étendre de -55°C à +100°C. La mise en fonctionnement d'un bloc optique de gyrolaser s'accompagne en effet d'une élévation de température du bloc optique, de l'ordre de dix à vingt-cinq degrés au-dessus de la température ambiante, alors que la température d'environnement à prendre en compte dans le dimensionnement thermique d'un équipement utilisant un gyrolaser s'étend typiquement sur une plage allant de -15°C à +70°C. Par ailleurs, en stockage, ce genre d'équipement peut subir des variations plus importantes avec des descentes jusqu'à -45°C, voire -52°C.

Suivant l'état de l'art, et compte-tenu de l'étendue de la plage de température de fonctionnement et de stockage du gyromètre, les pièces de la structure mécanique d'activation (roues et tulipes) sont généralement réalisées en un matériau à coefficient de dilation en température très faible sur cette plage de température, dans le but de minimiser les efforts de liaison liés aux différentiels de dilatation.

On sait par ailleurs qu'un bloc optique de gyrolaser est habituellement usiné dans une céramique à très faible coefficient de dilatation (typiquement de l'ordre de 10⁻²ppm/°C), tel que le Zerodur^{TM}, de manière à limiter les variations dimensionnelles de la ou des cavités en résonance optique pendant son fonctionnement. Les pièces de la structure mécanique d'activation, qui doivent reprendre les efforts dus aux forces d'inerties (provenant de l'activation du bloc optique et des chocs et vibrations du véhicule-support du gyromètre) avec une rigidité aussi grande que possible, de façon à minimiser les mouvements parasites du bloc optique, sans engendrer de contraintes excessives sur le bloc optique durant les excursions en température citées plus haut, sont donc avantageusement réalisées dans un alliage métallique à faible dilatation, tel que l'Invar™ qui est un alliage à 36 % de nickel et 64 % de fer.

C'est ainsi que pour de nombreux gyrolasers de précision, utilisés sur des avions civils ou militaires pour faire de la localisation par inertie pure, les roues, ainsi que les tulipes fixées sur le bloc optique (par collage ou par serrage), sont réalisées en Invar^{TM}, dont le coefficient de dilatation est remarquablement faible sur la plage de température à prendre en compte.

La liaison mécanique entre le moyeu de roue et la tulipe est alors avantageusement une liaison plan sur plan serrée par vis, les efforts tangents sous les têtes de vis ou entre les pièces engendrés par la dilatation de ces pièces en température étant limités par l'homogénéité des matériaux. Cette liaison mécanique par vis a l'avantage de pouvoir être aisément montable et démontable, ce qui facilite la production industrielle et la réparation. Plus précisément, la tulipe comporte un plateau cylindrique, ayant une face plane qui est serrée par vis sur le moyeu de la roue d'activation, qui est également cylindrique, l'autre face de la tulipe comprenant des pattes de fixation par collage du bloc optique.

Si cette solution technique est très satisfaisante quant aux aspects de rigidité mécanique, de réduction des contraintes dues aux différentiels de dilatation, ainsi que de facilité de montage et démontage, elle a un inconvénient majeur : son coût, lié au coût du matériau lui-même, l'Invar™, et à sa difficulté d'usinage.

Pour des applications moins exigeantes en termes de précision métrologique du capteur, d'autres assemblages mécaniques ont été utilisés, comprenant des roues réalisées en acier entre lesquelles le bloc optique était fixé par pincement. Mais une telle solution technique ne peut être appliquée que si l'on accepte un niveau de précision global moins important, compte-tenu des risques d'instabilités mécaniques en température.

### PROBLEME TECHNIQUE

Les solutions techniques d'assemblage du bloc optique d'un gyromètre à sa structure mécanique d'activation sont donc chères, ou ne permettent pas d'atteindre le niveau de précision métrologique recherché, sur la large gamme de température opérationnelle et de stockage des gyrolasers.

Le problème qui se pose est ainsi de concevoir une structure mécanique d'activation mettant en oeuvre des pièces réalisées dans un matériau peu coûteux, dont le coefficient de dilatation pourrait différer sensiblement de celui du matériau (céramique Zerodur™) dans lequel le bloc optique est réalisé, tout en assurant une liaison mécanique suffisamment rigide et insensible aux différentiels de dilatation thermique entre les matériaux sur l'étendue de la plage de température opérationnelle et de stockage du gyromètre, pour répondre aux besoins de précision métrologique des applications.

La structure mécanique doit notamment permettre de supporter les efforts de liaison entre pièces sans risques de glissement ni de déformation irréversible. Plus particulièrement, si on considère une structure mécanique comprenant une tulipe usinée en Invar™ sur laquelle le bloc optique est collé, assemblée dans une liaison plan sur plan par vis sur le moyeu d'une roue d'activation, plusieurs types d'efforts s'exercent sur le bloc optique :
- des efforts internes locaux, au niveau de chaque zone de collage, qui sont dus au fait qu'un joint de colle de quelques dizaines de microns d'épaisseur, de coefficient de dilatation de l'ordre de 20 à 100 ppm/°C et de module d'Young de l'ordre de 1 GPa sépare deux matériaux de module d'Young de l'ordre de 100 GPa, avec des coefficients de dilatation de l'ordre de 10⁻² ppm/°C pour l'un et de 1 ppm/°C pour l'autre. Ces efforts sont d'autant plus importants que les dimensions des zones de collage sont grandes (le différentiel de dilatation s'intègre sur toute la surface de la zone de collage). La limitation des contraintes dues à ces efforts et des risques de rupture associés passe donc par la limitation des dimensions individuelles des zones de collage et plus précisément par la limitation de la distance séparant les deux points les plus éloignés d'une zone de collage.
- des efforts internes d'ensemble, qui dépendent du différentiel de dilatation entre le bloc optique et les pièces de liaison et surtout des raideurs de ces pièces entre les zones de collage (la raideur du bloc optique étant le plus souvent à prendre en compte en l'état). La limitation de ces efforts s'obtient par le contrôle des raideurs des pièces assurant la liaison entre les zones de collage, c'est-à-dire de la tulipe et de la roue, ce qui ne doit pas aboutir à une diminution excessive des raideurs d'ensemble entre les zones de collage et les zones de reprise d'effort qui procurent la tenue aux vibrations et qui permettent l'activation du bloc optique.
- des efforts externes, dus aux forces d'inertie (générées par les chocs et les vibrations imposés à l'équipement ainsi que par le système d'activation du bloc optique), transmis au bloc optique via les liaisons entre pièces (serrage de la tulipe sur la roue et collage de la tulipe sur le bloc). Ces efforts externes créent des contraintes au niveau des collages qui seront d'autant plus faibles, pour des sollicitations imposées, que les zones de collage seront nombreuses, étendues et éloignées les unes des autres.

Il est difficile de concevoir un agencement dans lequel les contraintes dues à chacun de ces efforts sont toutes minimisées.

### RESUME DE L'INVENTION

L'idée à la base de l'invention réside dans une conception nouvelle de la roue d'activation et notamment dans une conception nouvelle du moyeu de la roue d'activation permettant la réalisation de la roue en acier, matériau moins coûteux, mais à plus fort coefficient de dilatation thermique que l'Invar™. Selon l'invention, on réalise un moyeu non pas en forme de cylindre de révolution, mais un moyeu à facettes, à base polygonale, formé de plusieurs parois planes, présentant des parties plus épaisses servant à la fixation plan sur plan de la tulipe et des parties minces autorisant un degré de liberté de déplacement radial.

L'invention concerne donc un gyromètre optique comportant un bloc optique fixé par collage sur des plages de fixation d'une pièce monobloc dite tulipe, et une roue d'activation monobloc en un matériau à coefficient de dilatation thermique différent de celui de la tulipe, la roue d'activation comportant une jante extérieure et un moyeu intérieur cylindrique à symétrie axiale relié à la jante par des lames planes radiales réparties autour du moyeu, caractérisé en ce que le moyeu cylindrique est formé par un ensemble continu de plusieurs parois planes réparties autour de l'axe du moyeu cylindrique, parallèles à cet axe, et tel que deux parois adjacentes du moyeu cylindrique forment un dièdre entre elles, avec une lame de la roue d'activation reliée au moyeu cylindrique le long de l'arête de ce dièdre, chaque paroi comprenant au moins une partie renflée et une partie amincie, la partie renflée servant à la fixation plan sur plan d'une face de la tulipe et la partie amincie autorisant un degré de liberté de déplacement radial de la partie servant à la fixation par rapport à la jante en présence d'une dilatation thermique différentielle entre la tulipe et la roue d'activation.

Suivant un mode de réalisation, les parties renflées sont avantageusement situées au milieu des parois et partagent ces parois en deux demi-plaques planes coplanaires minces, le déplacement radial en présence d'une dilatation thermique différentielle se faisant par flexion des demi-plaques planes minces dans une direction radiale.

Selon un autre mode de réalisation, les parties minces des parois sont des charnières d'axe parallèle à l'axe de la roue, usinées dans le moyeu cylindrique, et la partie renflée de chaque paroi est reliée à une lame de la roue d'activation par une double charnière, le déplacement radial en présence d'une dilatation thermique différentielle se faisant par rotation autour des deux charnières. Les parties renflées sont avantageusement situées au milieu des parois et partagent ces parois en deux demi-plaques coplanaires, chaque demi-plaque d'une paroi comprenant une charnière entre la partie renflée de la paroi et la demi-plaque, et une charnière entre la demi-plaque et une lame plane de la roue d'activation.

D'autres caractéristiques et avantages de l'invention sont détaillés dans la description suivante de modes de réalisation de l'invention, et en référence aux dessins annexés dans lesquels :
- la figure 1 est une vue éclatée d'une structure mécanique d'activation du bloc optique d'un gyrolaser selon l'invention;
- la figure 2 est une vue de l'assemblage du bloc optique à la structure mécanique de la figure 1 ;
- la figure 3 est une vue de dessus de la roue d'activation selon un mode de réalisation de l'invention ;
- la figure 4 est un détail de la figure 3, montrant l'agencement des parois du moyeu et des lames de la roue d'activation ;
- la figure 5 illustre la flexion en S des parties minces des parois selon l'invention, permettant d'absorber un différentiel de dilatation thermique entre la tulipe et la roue d'activation ; et
- la figure 6 illustre un autre mode de réalisation de l'invention.

### DESCRIPTION DETAILLEE

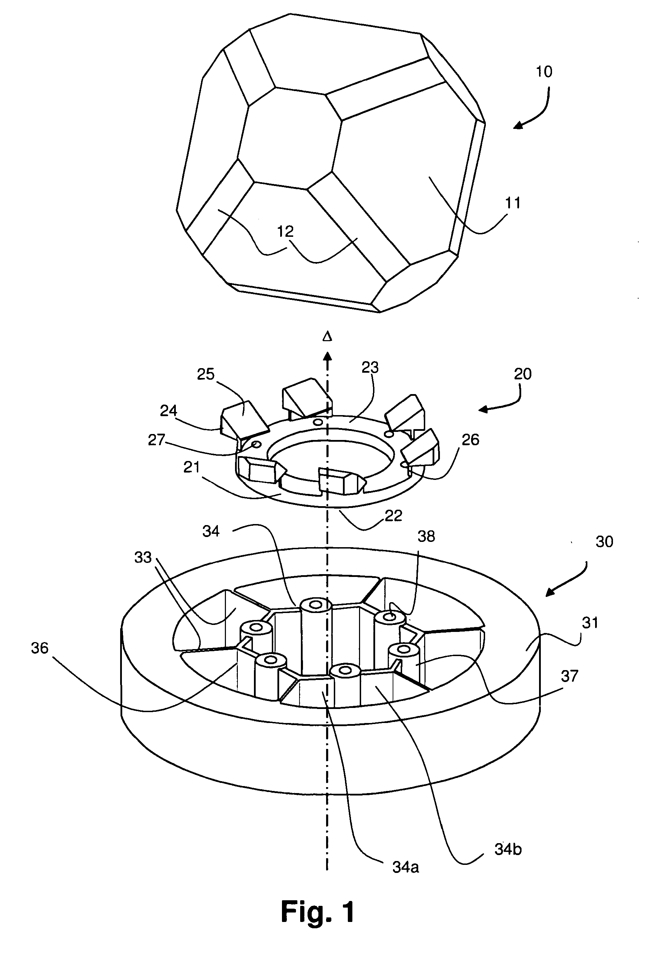

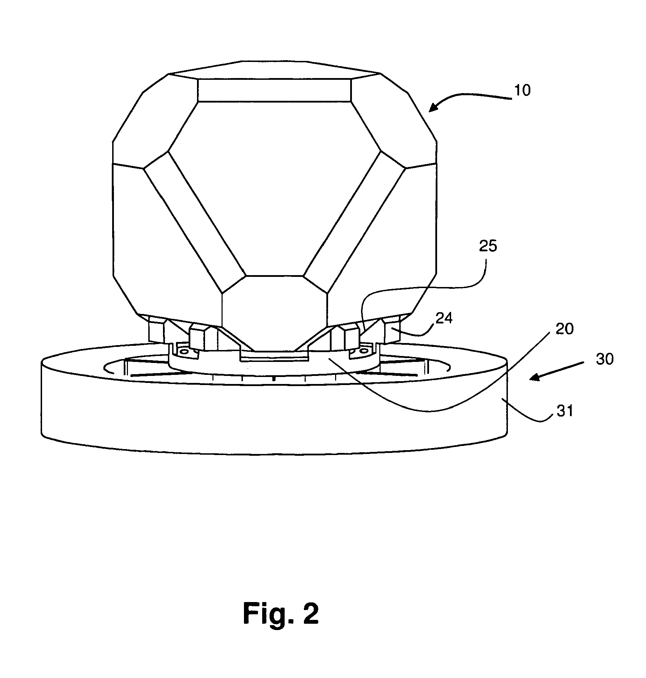

La figure 1 est une vue éclatée d'un gyromètre laser selon l'invention, comprenant le bloc optique 10 du gyromètre, une roue d'activation 30 d'axe Δ, vertical sur la figure, et une pièce 20 appelée tulipe réalisant la liaison mécanique entre le bloc optique et la roue. La figure 2 montre en une vue de face le gyromètre après assemblage bloc optique/tulipe/roue d'activation selon l'axe Δ. L'assemblage ainsi constitué permet d'engendrer un mouvement de rotation alternatif du bloc optique autour de l'axe Δ de la roue, dit axe d'activation.

Le bloc optique 10 se présente sous forme d'un polyèdre régulier à arêtes chanfreinées 12 (ou pans coupés), dans l'exemple un octaèdre présentant 8 faces sensiblement triangulaires 11, comme schématiquement illustré sur la figure 1. De manière bien connue, un tel bloc optique est à trois cavités optiques résonnantes, comme décrit par exemple dans le brevet EP 0857 947, auquel on peut se reporter pour les détails d'un mode de réalisation d'un gyromètre à cavités lasers. Le bloc optique est de type monobloc, réalisé dans un matériau à très faible dilatation thermique tel le Zerodur™, qui est usiné. Les miroirs et autres pièces périphériques du gyromètre ne sont pas représentés, car ce n'est pas l'objet de l'invention.

La tulipe 20 est conçue pour être rigide dans toutes les directions, tout en autorisant un peu de dilatation thermique. Elle est ainsi réalisée sous forme monobloc dans un matériau à coefficient de dilatation thermique aussi faible que possible, typiquement en Invar™ ou en Zerodur™.

La tulipe est formée d'un plateau cylindrique 21, en couronne. La face inférieure 22 du plateau est plane et orthogonale à l'axe Δ de la roue. Cette face est destinée à être assemblée au moyeu de la roue d'activation 30 dans une liaison plan sur plan, dans un plan orthogonal à l'axe de la roue. La face supérieure 23 du plateau présente des pattes de fixation 24 avec des faces 25 prévues pour le collage du bloc optique. Chaque patte est formée avec une partie 26 faisant charnière reliant la face de collage 25 au plateau cylindrique. Ces charnières 26 sont orientées tangentiellement sur le plateau. Elles permettent au bloc optique et à la tulipe de se dilater en température dans la direction radiale R en n'engendrant que des efforts limités, tout en garantissant une raideur en rotation très élevée du bloc par rapport au plateau cylindrique. Dans un exemple de réalisation pratique, la tulipe s'inscrit dans un cylindre de 58 mm de diamètre et de 12 mm de hauteur, avec des faces de collage 25 ayant chacune une surface de l'ordre de 100 mm². Ces faibles dimensions contribuent à limiter le coût de cette pièce de liaison mécanique.

Comme illustré sur la figure 2, le bloc optique est collé sur les faces 25 de collage de la tulipe, au niveau des trois arêtes chanfreinées 12 de l'une de ses faces triangulaires 11. Le collage assure le positionnement et l'orientation relatifs des deux pièces bloc optique/tulipe.

Dans l'exemple illustré, le bloc optique est ainsi collé en six zones, deux zones par arête, correspondant à deux pattes de fixation 24 de la tulipe, qui en comporte six.

La roue d'activation est réalisée dans un matériau en acier, moins coûteux que le matériau du bloc optique et de la tulipe. Ce matériau présente un coefficient de dilatation thermique plus élevé que le matériau de la tulipe. Il est typiquement réalisé en acier, qui a un coefficient de dilatation de l'ordre de 10 ppm/°C. Pour permettre l'accommodement du différentiel de dilatation thermique entre la tulipe et la roue d'activation réalisées dans des matériaux à coefficients de dilatation différents, la roue a une architecture originale, qui va maintenant être présentée. Cette architecture de la roue permet aux pièces assemblées de se dilater en température sans engendrer d'efforts internes trop importants, qui pourraient engendrer un glissement relatif de la tulipe par rapport à la roue, tout en garantissant une raideur en rotation très élevée à l'ensemble bloc optique/tulipe par rapport au moyeu de la roue.

Dans les illustrations des figures 1 à 3, l'axe Δ de la roue d'activation est vertical. La roue d'activation 30 d'axe Δ, comporte :
- une jante extérieure 31, d'axe Δ,
- un moyeu intérieur 32, un cylindre creux à symétrie axiale, d'axe Δ, et
- des lames planes radiales 33, orientées suivant l'axe Δ, c'est-à-dire verticales sur les figures, réparties autour du moyeu, et qui relient la jante extérieure et le moyeu intérieur.

Selon l'invention, le moyeu cylindrique 32 d'axe Δ est formé par un ensemble continu de plusieurs parois planes 34, ou facettes, réparties autour de l'axe Δ du cylindre et parallèles à cet axe. Deux parois adjacentes du moyeu forment ainsi un dièdre dont l'arête 36 est parallèle à l'axe Δ du cylindre. Le moyeu a ainsi une base polygonale, hexagonale, à parois 34 verticales dans l'exemple illustré sur les figures.

Les lames planes radiales 33 de la roue, prennent ainsi chacune appui sur le moyeu, auquel elles sont reliées, le long de l'arête 36 du dièdre formé par deux parois adjacentes du moyeu. On a ainsi autant de lames planes radiales que de parois planes ou facettes du moyeu. Dans l'exemple illustré d'un moyeu à base hexagonale, elles sont au nombre de six.

Les parois 34 du moyeu comportent chacune une partie renflée 37 séparant chaque paroi en deux demi-plaques coplanaires minces 34a et 34b.

Les parties renflées des parois servent à la fixation plan sur plan de la face plane de la tulipe.

Plus précisément, les parties renflées 37 des parois du moyeu, ont une extrémité 37a dans un même plan perpendiculaire à l'axe Δ, pour la fixation plan sur plan avec la face inférieure 22 du plateau de la tulipe. Ces extrémités 37a sont de préférence plus longues (hautes) suivant l'axe Δ du cylindre, que les demi-plaques des parois, comme illustré sur la figure 1. De cette façon, lorsque la face 22 du plateau de la tulipe est assemblée au moyeu, elle ne touche pas les parois du moyeu en dehors de ces extrémités 37a.

Ces parties renflées 37 du moyeu sont avantageusement percées de trous selon l'axe du cylindre permettant l'introduction d'une vis de fixation de la tulipe sur le moyeu (le plateau en couronne 21 de la tulipe comprenant des trous 27 correspondants). Le plateau 21 de la tulipe 20 peut ainsi être vissé par sa face 22 sur le moyeu de la roue d'activation 30, à l'endroit de chaque partie renflée 37.

De préférence et comme illustré, les parties renflées 37 sont en forme de cylindre d'axe parallèle à l'axe Δ, leur extrémité 37a offrant une surface de fixation en forme de disque.

Ces parties renflées 37 sont placées au milieu des parois, séparant chaque paroi 34 en deux demi-plaques coplanaires minces 34a et 34b. Chaque demi-plaque d'une paroi s'étend ainsi entre la partie renflée 37 de cette paroi et une lame plane radiale 33, à l'arête 36 du dièdre formé avec une paroi adjacente. Chaque partie renflée 37 d'une paroi 34 du moyeu est ainsi raccordée à deux lames planes radiales 33 de la roue d'activation par les demi-plaques minces planes 34a et 34b, de cette paroi.

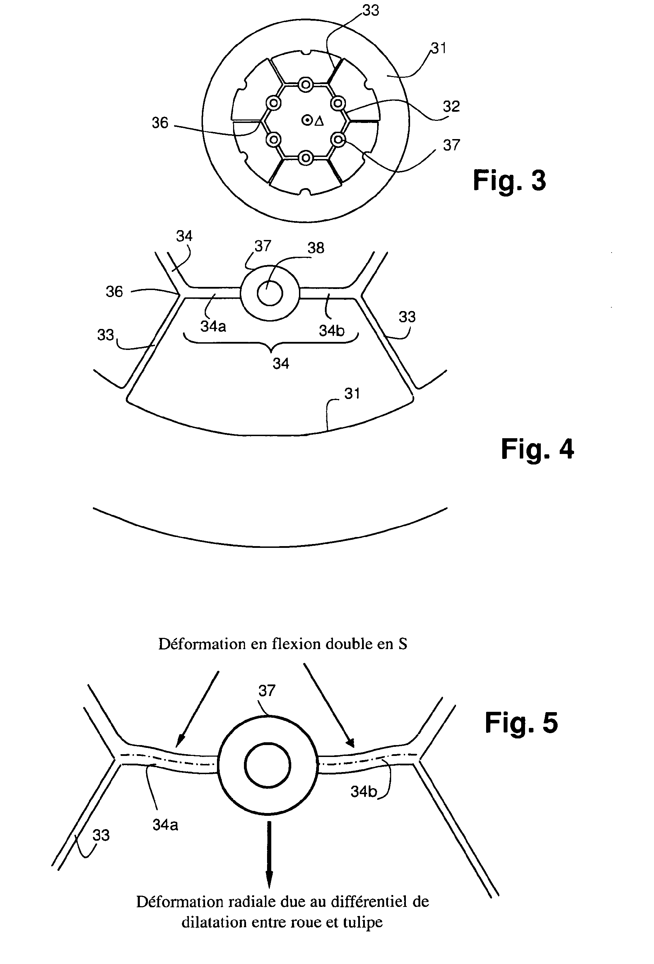

Ces demi-plaques coplanaires 34a et 34b minces forment des parties amincies de la paroi relativement à la partie renflée 37 qui sert à la fixation de la tulipe. Ces demi-plaques minces, déformables, de part et d'autre de la partie plus épaisse 37 de chaque paroi, autorisent un degré de liberté de déplacement radial de la partie renflée 37 par rapport à la jante 31 de la roue d'activation en présence d'une dilatation thermique différentielle entre la tulipe et la roue d'activation. Plus précisément, elles permettent l'accommodation de la structure à un différentiel de dilatation par un effet de flexion en S double dans la direction radiale, de part de d'autre de la zone de fixation de la tulipe 37, comme schématiquement illustré sur la figure 5. Cette accommodation permet d'une part de limiter le risque de rupture au niveau de la liaison collée entre la tulipe et le bloc optique et d'autre part de limiter le risque de glissement entre le moyeu de la roue et la tulipe, tout en permettant à ces liaisons d'assurer la raideur nécessaire vis-à-vis du basculement du bloc optique par rapport à la roue.

Dans les autres directions, ces demi-plaques travaillent essentiellement en compression et cisaillement.

Dans un exemple pratique, les demi-plaques planes minces pourront avoir une épaisseur de l'ordre de 1.5 à 2 mm, tandis que les parties renflées 37 en forme de cylindre servant à la fixation plan sur plan de la tulipe seront plus épaisses, avec un diamètre de cylindre de l'ordre de 8 mm.

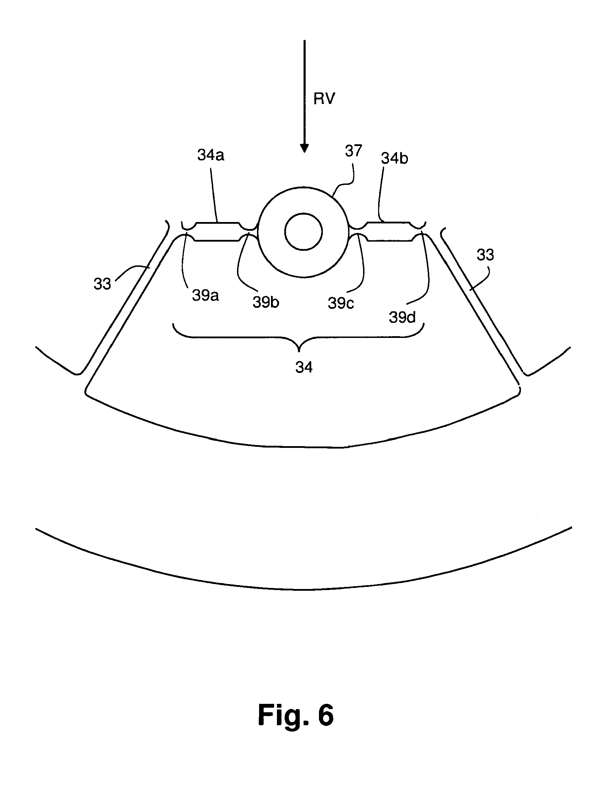

Un autre mode de réalisation de l'invention est illustré à la figure 6 qui est une variante de réalisation des parties minces des parois du moyeu, qui autorisent un degré de liberté de déplacement radial de la partie renflée 37 par rapport à la jante 31 de la roue d'activation en présence d'une dilatation thermique différentielle entre la tulipe et la roue d'activation. Dans cette variante, les parties minces des parois sont des charnières usinées dans chaque demi-plaque coplanaire.

Plus précisément, dans ce mode de réalisation, les deux demi-plaques coplanaires 34a et 34b de chaque côté de la zone de fixation 37, comportent chacune deux charnières d'axe vertical usinées dans le moyeu cylindrique : une charnière (39a, 39d) relie une demi-plaque (34a, 34b) à la partie épaisse 37 de la paroi ; une charnière (39b, 39c) relie la demi-plaque (34a, 34b) à une lame plane radiale 33. Dans cet agencement, chaque paroi du moyeu comprend ainsi quatre charnières d'axe vertical alignées perpendiculairement au rayon vecteur RV allant de l'axe Δ de la roue à la partie renflée 37 de la paroi. La partie renflée 37 de chaque paroi est ainsi reliée à une lame de la roue d'activation 33 par une double charnière telle que 39a et 39b, le déplacement radial en présence d'une dilatation thermique différentielle se faisant par rotation autour des deux charnières.

Les charnières forment des parties minces des parois, obtenues par usinage du moyeu cylindrique, relativement aux parties renflées 37 plus épaisses servant à la fixation plan sur plan de la tulipe. Entre les deux charnières 39a, 39b, respectivement 39c, 39d de chaque demi-plaque 34a, respectivement 34b, l'épaisseur de la paroi peut être variable, par exemple plus épaisse que les charnières. De préférence ces parties des demi-plaques entre les charnières seront moins épaisses ou aussi épaisses que la partie renflée 37.

En présence d'une dilatation thermique différentielle entre la tulipe (en Invar^{TM}) et le moyeu de la roue (en acier), le déplacement radial dû à un différentiel de dilatation entre la tulipe et le moyeu se fait alors par une petite rotation autour des deux charnières de chaque côté de la zone 37 de fixation de la tulipe.

Les épaisseurs relatives des charnières, des parties des demi-plaques hors des charnières, et des parties renflées de fixation de la tulipe, seront en pratique choisies pour assurer efficacement la fonction d'accommodation du différentiel de dilation thermique, tout en minimisant le volume de matériau nécessaire à la fabrication du moyeu.

Dans un exemple, la zone usinée amincie formant charnière pourra avoir une épaisseur de l'ordre de 0.5 à 1 mm, et les zones renflées 37, typiquement cylindriques, pourront avoir un diamètre de l'ordre de 2 à 3 mm.

L'invention dont deux modes de réalisation viennent d'être décrits permet, grâce à l'architecture de roue avec un moyeu à facettes, aux lames planes radiales de s'appuyer sur le moyeu au niveau des arêtes entre les facettes formées de parois planes perpendiculaires à la direction radiale des efforts dus aux dilatations différentielles. Ces parois planes ont une partie renflée au milieu de la paroi, servant à la fixation plan sur plan d'une face plane de la tulipe et de part et d'autre de cette partie renflée, au moins une partie amincie qui se déforme en flexion (figures 4 et 5) ou en rotation (figure 6). Un tel agencement offre une souplesse orientée limitant les efforts de liaison entre le moyeu de la roue et la tulipe collée au bloc optique.

Cette architecture de roue originale, avec un moyeu à facettes permet de minimiser les efforts radiaux dus au différentiel de dilatation existant entre la tulipe et le moyeu de la roue. La roue peut donc être réalisée avec une variété de matériaux moins coûteux que l'Invar™ et l'on peut conserver le principe d'une liaison plan sur plan serrée par vis. La diminution des efforts en température permet aussi d'envisager l'utilisation de vis moins chères et moins nombreuses pour assurer la liaison démontable entre le moyeu de la roue et la tulipe.

Dans les exemples illustrés sur les figures, on remarquera que la jante 31 de la roue d'activation a une forme simple, en couronne. On notera qu'il existe des formes plus complexes, étudiées pour accroître la raideur de la roue dans les modes de déformation pour lesquels le bloc optique tend à se déplacer en translation dans la direction de l'axe Δ de la roue, notamment une forme à deux couronnes avec un manchon assurant la liaison. L'invention s'applique à toutes ces formes de jante de la roue d'activation.

Toutes choses égales par ailleurs (matériaux, épaisseurs des parois, hauteur de la roue, longueur des lames de la roue,...), on a pu vérifier qu'avec un moyeu selon l'invention, reliant les points de fixation de la tulipe par une structure à six facettes comme illustré sur les figures, les efforts radiaux en température imposés à une tulipe en Invar^{TM} étaient diminués de 40 % par rapport à un moyeu classique à géométrie cylindrique de révolution. On a aussi pu vérifier que les raideurs de l'assemblage bloc optique/tulipe/roue vis-à-vis du basculement latéral et de la translation du bloc optique par rapport à l'extérieur de la roue étaient au moins aussi grandes que celles obtenues avec un moyeu de géométrie cylindrique de révolution. L'invention ne se limite pas à une structure à six facettes comme représenté, même si le gain obtenu en ce qui concerne l'accommodement du différentiel de dilatation entre la roue et la tulipe diminue avec le nombre de facettes.

L'invention permet avantageusement de réaliser un gyromètre laser, avec une roue d'activation (c'est-à-dire la jante extérieure, le moyeu intérieur, et les lames radiales) en acier.

## Revendications

1. Gyromètre optique comportant un bloc optique (10) fixé par collage sur des plages de fixation (25) d'une pièce monobloc dite tulipe (20), et une roue d'activation monobloc (30) en un matériau à coefficient de dilatation thermique différent de celui de la tulipe, la roue d'activation comportant une jante extérieure (31) et un moyeu intérieur (32) cylindrique à symétrie axiale relié à la jante par des lames planes radiales (33) réparties autour du moyeu, **caractérisé en ce que** le moyeu cylindrique est formé par un ensemble continu de plusieurs parois planes (34) réparties autour de l'axe (Δ) du cylindre, parallèles à cet axe et tel que deux parois adjacentes du moyeu cylindrique forment un dièdre entre elles, avec une lame de la roue d'activation reliée au moyeu cylindrique le long de l'arête (36) de ce dièdre, chaque paroi comprenant au moins une partie renflée (37) et une partie amincie (34a), la partie renflée servant à la fixation plan sur plan d'une face de la tulipe et la partie amincie autorisant un degré de liberté de déplacement radial de la partie servant à la fixation par rapport à la jante en présence d'une dilatation thermique différentielle entre la tulipe et la roue d'activation.

2. Gyromètre optique selon la revendication 1, dans lequel les parties renflées (37) sont situées au milieu des parois et partagent ces parois en deux demi-plaques planes coplanaires minces (34a, 34b), le déplacement radial en présence d'une dilatation thermique différentielle se faisant par flexion des demi-plaques planes minces dans une direction radiale.

3. Gyromètre optique selon la revendication 1, dans lequel les parties minces des parois sont des charnières (39a, 39b) d'axe parallèle à l'axe (Δ) du moyeu cylindrique, usinées dans le moyeu cylindrique, et la partie renflée (37) d'une paroi est reliée à une lame de la roue d'activation (33) par une double charnière (39a, 39b), le déplacement radial en présence d'une dilatation thermique différentielle se faisant par rotation autour des deux charnières.

4. Gyromètre optique selon la revendication 3, dans lequel les parties renflées (37) sont situées au milieu des parois et partagent ces parois en deux demi-plaques coplanaires, chaque demi-plaque d'une paroi (34a) comprenant une charnière (39b) entre la partie renflée de la paroi et chaque demi-plaque, et une charnière (39a) entre la demi-plaque et une lame plane (33) de la roue d'activation.

5. Gyromètre optique selon l'une des revendications précédentes, dans lequel les parties renflées (37) sont percés de trous permettant l'introduction d'une vis de fixation de la tulipe sur le moyeu.

6. Gyromètre optique selon l'une des revendications précédentes, dans lequel les parties renflées (37) ont une extrémité (37a) servant à la fixation plus haute que les autres parties des parois, en sorte que la tulipe n'est en contact avec le moyeu que par lesdites parties renflées.

7. Gyromètre optique selon l'une des revendications précédentes dans lequel la roue d'activation, y compris le moyeu, est réalisée en acier, et la tulipe en Invar™ ou Zerodur™.

8. Gyromètre optique selon l'une des revendications précédentes, dans lequel le moyeu est à base hexagonale.

## Patentansprüche

1. Optisches Gyrometer, das Folgendes umfasst: einen Optikblock (10), der durch Kleben auf Befestigungsbereiche (25) eines Einblockteils befestigt wird, Kranz (20) genannt, und ein Einblockaktivierungsrad (30) aus einem Material mit einem Wärmeausdehnungskoeffizienten, der sich von dem des Kranzes unterscheidet, wobei das Aktivierungsrad eine Außenfelge (31) und eine zylindrische Innennabe (32) mit einer axialen Symmetrie aufweist, die mit dem Kranz durch um die Nabe herum verteilte ebene Radialstreben (33) verbunden ist, **dadurch gekennzeichnet, dass** die zylindrische Nabe durch einen fortlaufenden Satz aus mehreren ebenen Wänden (34) gebildet wird, die um die Achse (Δ) des Zylinders parallel zu dieser Achse und so verteilt sind, dass zwei benachbarte Wände der zylindrischen Nabe zusammen ein Dieder bilden, wobei eine Strebe des Aktivierungsrads mit der zylindrischen Nabe entlang der Kante (36) des Dieders verbunden ist, wobei jede Wand wenigstens einen gewölbten Teil (37) und einen dünnen Teil (34a) aufweist, wobei der gewölbte Teil zur Ebene-an-Ebene-Befestigung einer Fläche des Kranzes verwendet wird und der dünne Teil einen Freiheitsgrad für eine radiale Verschiebung des Teils zulässt, der zum Befestigen in Bezug auf die Felge in Anwesenheit einer differentialen Wärmeausdehnung zwischen dem Kranz und dem Aktivierungsrad benutzt wird.

2. Optisches Gyrometer nach Anspruch 1, wobei sich die gewölbten Teile (37) in der Mitte der Wände befinden und die Wände in zwei dünne koplanare flache Halbplatten (34a, 34b) unterteilen, wobei die radiale Verschiebung in Anwesenheit einer differentiellen Wärmeausdehnung durch Biegen der dünnen flachen Halbplatten in einer radialen Richtung erfolgt.

3. Optisches Gyrometer nach Anspruch 1, wobei die dünnen Teile der Wände Gelenke (39a, 39b) mit einer Achse sind, die parallel zur Achse (Δ) der zylindrischen Nabe ist, in die zylindrische Nabe eingearbeitet, und der gewölbte Teil (37) einer Wand mit einer Strebe des Aktivierungsrads (33) durch ein Doppelgelenk (39a, 39b) verbunden ist, wobei die radiale Verschiebung in Anwesenheit einer differentiellen Wärmeausdehnung durch Rotation um die beiden Gelenke erfolgt.

4. Optisches Gyrometer nach Anspruch 3, wobei sich die gewölbten Teile (37) in der Mitte der Wände befinden und die Wände in zwei koplanare Halbplatten unterteilen, wobei jede Halbplatte einer Wand (34a) ein Gelenk (39b) zwischen dem gewölbten Teil der Wand und jeder Halbplatte sowie ein Gelenk (39a) zwischen der Halbplatte und einer ebenen Strebe (33) des Aktivierungsrades aufweist.

5. Optisches Gyrometer nach einem der vorherigen Ansprüche, wobei die gewölbten Teile (37) mit Löchern perforiert sind, die das Einführen einer Schraube zum Befestigen des Kranzes an der Nabe zulassen.

6. Optisches Gyrometer nach einem der vorherigen Ansprüche, wobei die gewölbten Teile (37) ein Ende (37a) zum Befestigen aufweisen, das höher liegt als die anderen Teile der Wände, so dass der Kranz nur über die gewölbten Teile mit der Nabe in Kontakt ist.

7. Optisches Gyrometer nach einem der vorherigen Ansprüche, wobei das Aktivierungsrad einschließlich der Nabe aus Stahl gefertigt ist und der Kranz aus Invar™ oder Zerodur™ gefertigt ist.

8. Optisches Gyrometer nach einem der vorherigen Ansprüche, wobei die Nabe eine hexagonale Basis hat.

## Claims

1. An optical gyrometer comprising an optical block (10) that is fixed by bonding onto fixation areas (25) of a monoblock part, designated crown (20), and a monoblock activation wheel (30) made from a material with a thermal expansion coefficient that is different to that of said crown, said activation wheel comprising an external rim (31) and a cylindrical internal hub (32) with axial symmetry that is connected to said rim by flat radial panels (33) that are distributed around said hub, **characterised in that** said cylindrical hub is formed by a continuous set of a plurality of flat walls (34) that are distributed around the axis (Δ) of said cylinder, parallel to said axis and such that two adjacent walls of said cylindrical hub together form a dihedral, with a panel of said activation wheel connected to said cylindrical hub along the edge (36) of said dihedral, each wall comprising at least one bulbous section (37) and one thin section (34a), said bulbous section being used for the plane-to-plane fixation of a face of said crown and said thin section allowing a degree of freedom for radial displacement of the section that is used for the fixation relative to the rim in the presence of a differential thermal expansion between said crown and said activation wheel.

2. The optical gyrometer according to claim 1, wherein said bulbous sections (37) are located in the middle of said walls and divide said walls into two thin coplanar flat half-plates (34a, 34b), the radial displacement in the presence of a differential thermal expansion occurring by bending the thin flat half-plates in a radial direction.

3. The optical gyrometer according to claim 1, wherein the thin parts of said walls are joints (39a, 39b) with an axis that is parallel to the axis (Δ) of said cylindrical hub, machined into said cylindrical hub, and said bulbous section (37) of a wall is connected to a panel of said activation wheel (33) by a double joint (39a, 39b), the radial displacement in the presence of a differential thermal expansion occurring by rotation around the two joints.

4. The optical gyrometer according to claim 3, wherein said bulbous sections (37) are located in the middle of said walls and divide said walls into two coplanar half-plates, each half-plate of a wall (34a) comprising a joint (39b) between said bulbous section of said wall and each half-plate, and a joint (39a) between the half-plate and a flat plate (33) of said activation wheel.

5. The optical gyrometer according to any one of the preceding claims, wherein said bulbous sections (37) are perforated with holes that allow the introduction of a screw for fixing said crown to said hub.

6. The optical gyrometer according to any one of the preceding claims, wherein said bulbous sections (37) have one end (37a) for fixation that is higher than the other sections of said walls, so that said crown is only in contact with said hub via said bulbous sections.

7. The optical gyrometer according to any one of the preceding claims, wherein said activation wheel, including said hub, is made of steel and said crown is made of Invar™ or Zerodur™.

8. The optical gyrometer according to any one of the preceding claims, wherein said hub is essentially hexagonal.
